**Europäisches Patentamt**

**European Patent Office**

**Office européen des brevets**

(11) Publication number: **0 204 010**
**B1**

# EUROPEAN PATENT SPECIFICATION

(45) Date of publication of patent specification: **28.12.88**

(21) Application number: **85106489.9**

(22) Date of filing: **25.05.85**

(51) Int. Cl.⁴: **F 16 D 1/08,** F 16 D 1/04, F 16 C 3/02

(54) **Coupling for connecting shafts for rotation.**

(43) Date of publication of application:
**10.12.86 Bulletin 86/50**

(45) Publication of the grant of the patent:
**28.12.88 Bulletin 88/52**

(84) Designated Contracting States:
**DE FR GB IT**

(56) References cited:
**FR-A-1 232 031**
**FR-A-1 401 468**
**GB-A- 829 961**
**GB-A-1 356 393**
**GB-A-1 403 054**
**US-A-3 628 815**
**US-A-3 851 902**

(73) Proprietor: **THE BOEING COMPANY**
**7755 East Marginal Way South**
**Seattle Washington 98124 (US)**

(72) Inventor: **Rumberger, William E.**
**3523 Horton Road**
**Newtown Square Pennsylvania (US)**

(74) Representative: **Dreiss, Hosenthien & Fuhlendorf**
**Gerokstrasse 6**
**D-7000 Stuttgart 1 (DE)**

Courier Press, Leamington Spa, England.

## Description

The present invention relates to a coupling for connecting two shafts for rotation, each of which defining a longitudinal axis and having a hollow outwardly flared end portion relative to the longitudinal axis which defines an inner and an outer surface comprising:

a reaction ring having an outer surface comprising two surface sections which subtend one another and define an acute angle between them, each surface section engaging a respective inner surface of the outwardly flared end portions;

adjustable clamping means having an inner surface comprising two surface section which subtend one another and define an acute angle between them, each surface section engaging a respective outer surface of the outwardly flared end portions and

adjustment means for adjusting the clamping means against the outer surface of each outwardly flared end portion to thereby increase the pressure at the engaged surfaces.

A coupling for connecting two pipes for transmitting fluid having the above mentioned features is known from US—A—3 851 902. This coupling is used for a static application for fluid flow and does therefore comprise as a reaction ring a sealing ring for a tight sealing of the two ends of the pipes to be connected.

In order to transmit rotational forces normally the shaft to be coupled must be modified in some way to accommodate the coupling. For example, holes may have to be drilled in the shaft to accommodate bolts or other fastening means; the shaft may have to be grooved to accommodate keys or the like; or the shaft may be subjected to excessive compression due to press fitting. All of these methods detract from the advantages of the continuous filament structural design, in that the load transmission capacity of the shaft is substantially reduced through the interruption of the filaments by drilling holes or any machining which will cut the filaments. Further, if the composite shaft is subjected to alternating loads, the stress concentration in the areas of interrupted fibers could result in premature failure. The development of continuous roving or tape wound shafting has introduced a redundant and forgiving structure when compared with the rapid crack propagating and notch sensitive characteristics of metal structures. However, the use of holes or grooves for coupling purposes in composite shafts detracts from the advantages of the composite material, hence it would be desirable to eliminate cutting of fibers in any of the stressed areas.

In fact, GB—A—1 356 393 discloses a composite structure comprising a tube of epoxy resin and a metal end piece which are connected by means of protrusions and recesses, however, this composite structure is just for improving the transmission of torsion, compression and tension loads. Further, this composite structure does not comprise a coupling and therefore this structure cannot be dismounted.

The object of the present invention is to provide a coupling which can be used to connect shafts for rotation without requiring machining which would cut the load carrying filaments of a shaft and with which coupling a rotation from one shaft to the other one may be reliably transmitted.

This object is solved in that

i) at least one of said surfaces includes alignment and torque transmitting means,

ii) at least one surface section of at least one of the reaction ring and adjustable clamping means includes alignment and torque transmitting means compatible with the alignment and torque transmitting means of the shaft surfaces, and

iii) the engagement of the compatible alignment and torque transmitting means substantially preventing relative movement between the engaged surface thereby aligning the longitudinal axes of the two shafts and permitting torque transmission and thereby rotation about the aligned longitudinal axes.

With the subject matter of the present invention not only a torque transmission which is typical for dynamic applications but also a shaft alignment can be reliably achieved.

Embodiments of the invention are defined in the subclaims.

Brief description of the drawings

Seven figures are presented directed to two preferred embodiments and several variants of these embodiments of the invention. These are:

Figure 1, which illustrates an external view of the coupling and two shafts connected by the coupling;

Figure 2, which illustrates a view of Figure 1 taken along line 2—2, illustrating details of the shaft ends, the reaction ring, and the split-ring in accordance with one embodiment of the invention;

Figure 3, which illustrates a view of Figure 1 taken along line 3—3, illustrating the features illustrated in Figure 2 and in addition, the alignment and torque coupling feature according to one embodiment of the invention;

Figure 4, which is a view taken along line 4—4 of Figure 3, illustrating one configuration of the alignment and torque transmitting feature according to one embodiment of the invention;

Figure 5, which illustrates an end view of a variant of the reaction ring;

Figure 6, which illustrates a view of Figure 5 taken along line 6—6; and

Figure 7, which illustrates, in partial cross-sectional view, another embodiment of the invention excluding the split-ring.

Detailed description of the preferred embodiments

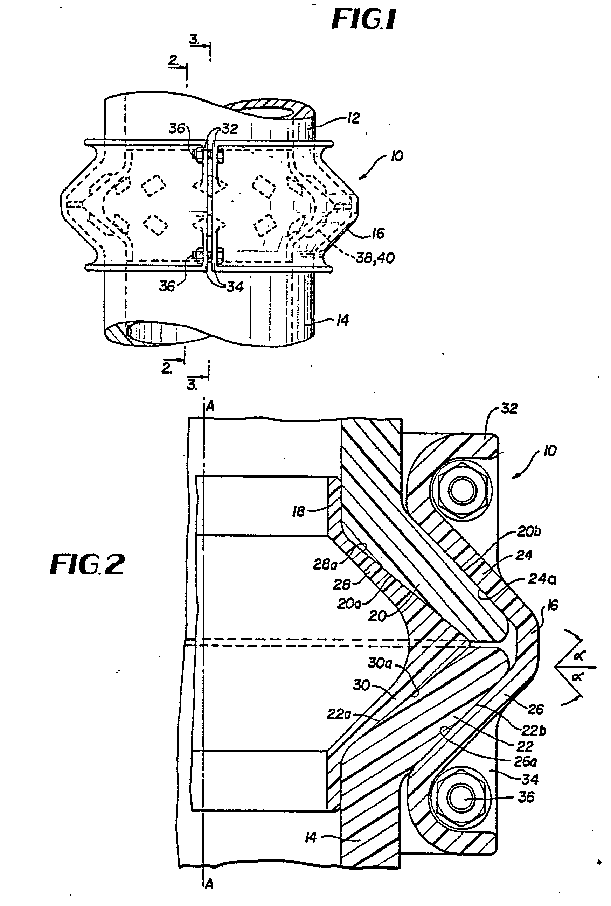

Turning to Figure 1, a coupling 10 connecting shafts 12 and 14 is shown. The coupling 10 according to a first embodiment comprises two major parts, namely, an adjustable split-ring 16 and a reaction ring 18.

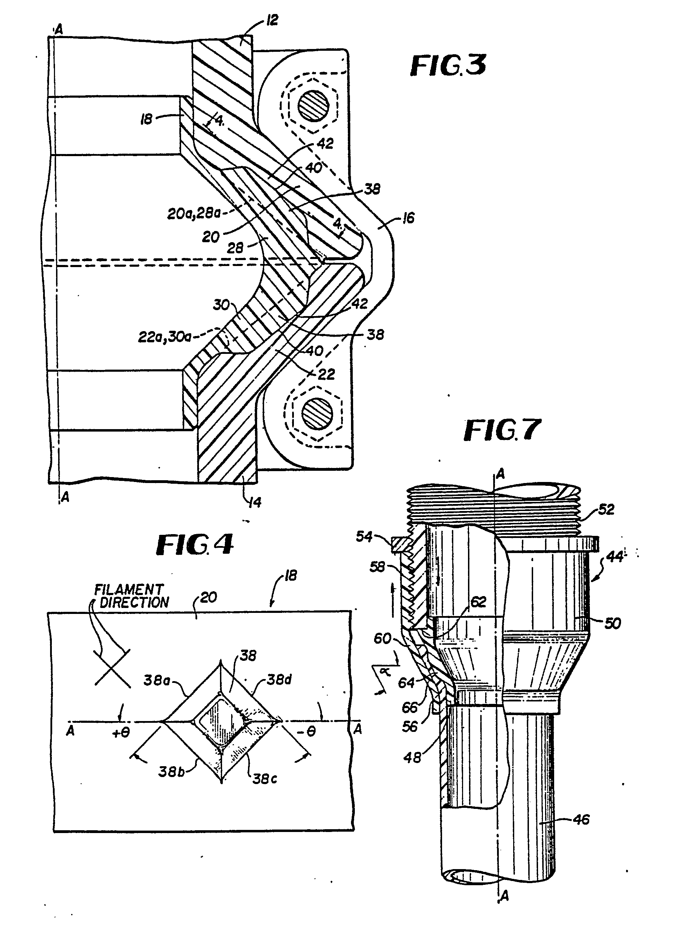

The shafts include an outwardly flared end portion 20 and 22 relative to the longitudinal axis A—A (Figures 2 and 3). The flare angle α is arbitrary, and preferably less than 45°. The flared end portions 20 and 22 define inner surfaces 20a, 22a and outer surfaces 20b, 22b.

The split-ring 16 and the reaction ring 18 include outwardly flared portions 24, 26, 28 and 30. The flare angle α of each of the portions 24, 26, 28 and 30 is equal to the flare angle α of the end portions 20 and 22 of the shafts 12 and 14.

The portions 24, 26 of the split-ring 16, and the portions 28, 30 of the reaction ring 18 are joined to form a continuous structure. As such, the split-ring 16 defines two inner surface sections 24a and 26a, while the reaction ring 18 defines two outer surface sections 28a and 30a. The surfaces 24a, 26a, 28a and 30a comprise compatible surfaces to the surfaces 20b, 22b, 20a and 22a, respectively. Engagement of the surfaces under pressure locks the two shafts 12 and 14 together. To generate the pressure at the engaged surfaces, the split-ring 16 is adjusted circumferentially. For this purpose, the split-ring 16 is provided with lug pairs 32 and 34 which receive a threaded bolt and nut combination 36 (Figures 1 and 2). Drawing the lugs of the lug pairs 32 and 34 together by the bolt and nut combinations 36 generates a hoop-type pressure at the engaged surfaces.

· To effect a more positive alignment of the shafts 12 and 14, and a more positive torque coupling between the shafts, which is desirable when one of the shafts is to drive the other shaft about the longitudinal rotation axis A—A, either the split-ring 16 or the reaction ring 18 is preferably provided with extensions or protrusions which engage in corresponding recesses in the flared end portions of the shaft. To illustrate: Figure 3 shows the reaction ring portions 28 and 30 provided with protrusions 38 which are received within recesses 40 in the end portions 20 and 22 of the shafts 12 and 14. During adjustment of the split-ring 16 the protrusions 38 are received within their respective recesses 40, thereby bringing the respective longitudinal axes A—A of the shafts 12 and 14 into coincidence. Also, when, for example, a torque is to be transmitted between the shafts 12 and 14, the efficiency of the transmission is improved by the engagement of the protrusions 38 within their respective recesses 40. This is so because, as a result of the engagement of the protrusions within their respective recesses, reliance on frictional forces at the engaged surfaces is reduced and a surface-to-surface contact in the direction of rotation produced by the protrusions and the wall of the recess in which it engages is achieved.

Preferably, the protrusions 38 and the corresponding recesses 40 define a polygon in outline, such as the star-outline shown in Figure 4. The desirability of this outline will be made apparent from the discussion of the method that follows.

In those applications where a torque reversal is desirable, an elastomeric sheet 42 (Figure 3) is inserted between the surfaces 20a, 28a and 22a, 30a. The elastomeric sheet 42 serves to distribute the load over a larger surface area by its deformation.

As a first variant of the first embodiment, it is proposed to form either the flared end portions 20 or 22 integral with the reaction ring 18.

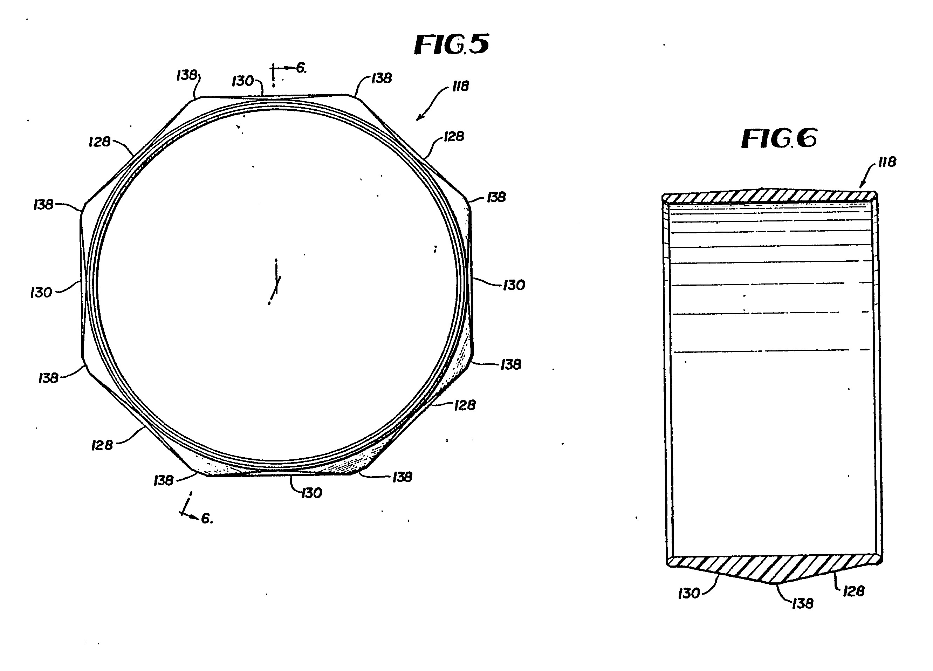

As a second variant of the first embodiment, it is proposed to modify the reaction rings 18 to that shown in Figures 5 and 6, i.e., to a reaction ring 118. The outer surface of the reaction ring 118 has an octagon profile in end view (Figure 5) and matching cones in side view (Figure 6). The octagon profile is made up of flat surfaces 128 and 130 which form apexes 138 between them. The flat surfaces and apexes (together referred to as flats) serve the function of the protrusions 38 of the previous embodiment. For this configuration of reaction ring the inner surface of the flared end portions 20 and 22 are appropriately fabricated each with a matching surface.

A second embodiment of the invention is shown in Figure 7. The coupling 44 can serve to connect two shafts as does the coupling 10. The coupling 44 can also serve to connect a shaft, such as the shaft 46, to any other device which need not be another shaft. For example, the coupling 44 can be used to connect the shaft 46 to the yoke of a universal joint.

The coupling 44 includes a reaction ring 48, an outer sleeve 50, a fitting 52 and a jam nut 54. As in the previous embodiment, the shaft 46 is provided with an outwardly flared end portion 56 defining a flare angle α as before. The outer sleeve 50 includes an upper section 58 and a lower section 60. The lower section 60 and the reaction ring 48 are also flared as is the end portion 56 of the shaft 46, defining thereby compatible engagement surfaces with the flared end portion 56. The upper section 58, the fitting 52 and the jam nut 54 have threaded surfaces for mutual engagement. The reaction ring 48 includes a shoulder 62 which engages one end of the fitting 52. Relative movement of the outer sleeve 50 and the fitting 52 in the direction shown by the arrows produces the desired pressure at the engaged surfaces of the flared segments of the coupling.

As before, to achieve a more positive alignment and torque coupling the reaction ring 48 and/or the lower section 60 of the outer sleeve 50 are provided with protrusions 64 received within corresponding recesses 66 within the flared end portion 56 of the shaft 46.

The jam nut 54 is threaded down against the upper section 58 of the outer sleeve 50 to prevent opposed relative movement of the outer sleeve 50 and the fitting 52 which would release the pressure at the engaged surfaces.

As with the first embodiment, a variant is proposed according to which the reaction ring 48 and the fitting 52 are fabricated as a single component, or the shaft 46 and reaction ring 48 are fabricated as a single component.

In each embodiment, the connection is achieved without the need to cut, or in any way deform the shaft.

An important feature of the invention resides in the formation of the outwardly flared end portions of the shafts. For metal shafts, the outwardly flared end portions can be produced by known machining casting or deformation methods. For composite shafts, the mandrel or mold is designed to produce the flared end portions. For example, in fabricating a composite shaft using the known filament-winding technique, the mandrel on which the filaments are wound includes an outwardly flared end. Typically, the filaments are wound at an angle to the longitudinal axis of the mandrel for strength enhancement. If the flared end portions are to have recesses, the mandrel is provided with protrusions, shaped, preferably, to have sides which coincide with the filament winding angle. Subsequent to winding, the wound assembly is subjected to a curing cycle and the shaft structuralized on the mandrel. Thereafter, the mandrel is removed, for example, it can be dissolved. The result is a shaft with an outwardly flared end, and, if desired, with recesses in the outwardly flared end.

Either or both the split ring 16 and reaction ring 18 are made of metal or composites. The techniques used to fabricate these parts are similar to those for fabricating the shafts. For example, in fabricating the reaction ring 18 of composite material, a filament winding technique can be used. The mandrel is simply designed to have the desired shape. In the event that protrusions are desired on the reaction ring 18, the mandrel would be provided with the protrusions. The filaments would be wound at an angle $+\theta$ (Figure 4) to form the sides 38a, 38c and then again at an angle $-\theta$ to form the sides 38d, 38b of the protrusion 38. The result is a crossply construction.

The wound assembly is subjected to a partial curing cycle sufficient to form a sufficiently rigid assembly so that the mandrel can be removed. This leaves a part with protrusions on one surface and corresponding recesses on the opposite facing surface which is due to the protrusions on the mandrel. These recesses are then filled with composite fillers, which themselves can be filament wound or formed as a lay-up. After the recesses are filled, the assembly is subjected to a final curing cycle and a structuralized reaction ring, such as that shown in Figure 3 formed.

With this invention there results a coupling with relatively few parts, the emphasis being on retaining only those parts which are located in the primary load path and as few other parts as possible. Also with this invention, there results a method of coupling two shafts which employs hoop-type pressure loading on two surfaces of the shafts to be coupled.

## Claims

1. A coupling (10) for connecting two shafts (12, 14) for rotation, each of which defining a longitudinal axis and having a hollow outwardly flared end portion (20, 22) relative to the longitudinal axis which defines an inner and an outer surface (20a, 22a; 20b, 22b) comprising:

a reaction ring (18; 118) having an outer surface comprising two surface sections (28a, 30a) which subtend one another and define an acute angle (α) between them, each surface section (28a, 30a) engaging a respective inner surface (20a, 22a) of the outwardly flared end portions (20, 22);

adjustable clamping means (16) having an inner surface comprising two surface sections (24a, 26a) which subtend one another and define an acute angle (α) between them, each surface section (24a, 26a) engaging a respective outer surface (20b, 22b) of the outwardly flared end portions (20, 22); and

adjustment means (34, 36) for adjusting the clamping means (16) against the outer surface (20b, 22b) of each outwardly flared end portion (20, 22) to thereby increase the pressure at the engaged surfaces; characterized in that

i) at least one of said surfaces (20a, 22a; 20b, 22b) includes alignment and torque transmitting means (40),

ii) at least one surface section (28a, 30a; 24a, 26a) of at least one of the reaction ring (18, 118) and adjustable clamping means (16) includes alignment and torque transmitting means (38; 128, 130, 138) compatible with the alignment and torque transmitting means (40) of the shaft surfaces (20a, 22a; 20b, 22b); and

iii) the engagement of the compatible alignment and torque transmitting means (40; 38, 128, 130, 138) substantially preventing relative movement between the engaged surfaces thereby aligning the longitudinal axes of the two shafts (12, 14) and permitting torque transmission and thereby rotation about the aligned longitudinal axes.

2. The coupling as defined in claim 1, characterized in that the adjustable clamping means comprises a split-ring (16) and the adjustment means comprises a nut-and-bolt combination (34, 36) connecting both rings of the split-ring.

3. The coupling as defined in claim 1 or 2, characterized in that the reaction ring (18, 118) further has an inner surface comprising two surface sections, each of which extends generally parallel to a corresponding one of the outer surface sections (28a, 30a).

4. The coupling as defined in claims 1 to 3, characterized in that the adjustable clamping means (16) further has an outer surface comprising two surface sections, each of which extends generally parallel to a corresponding one of the inner surface sections (24a, 26a).

5. The coupling as defined in claims 1 to 4, characterized in that the alignment and torque transmitting means for aligning the shafts (12, 14) and permitting torque transmission comprises at least one protrusion (38; 128, 130, 138) on the outer surface (28a, 30a) of the reaction ring (18) and a corresponding recess (40) in the inner surface (24a, 26a) of a facing one of the inner surfaces of an outwardly flared end portion (20, 22).

6. The coupling as defined in claim 5, characterized in that at least one protrusion and corresponding recess define a polygon (128, 138, 130) in outline.

7. The coupling as defined in claims 1 to 6, characterized in that the shafts (12, 14), the reaction ring (18, 118) and the adjustable clamping means (16) comprise composite structures.

**Patentansprüche**

1. Kupplung (10) zur Rotationsverbindung zweier Wellen (12, 14), von denen jede eine Längsachse definiert und einen hohlen, bzgl. der Längsachse nach außen konisch erweiterten Endbereich (20, 22) aufweist, welcher eine Innen- und eine Außenfläche (20a, 22a; 20b, 22b) bildet, mit:

einem Reaktionsring (18; 118), der eine Außenfläche mit zwei Flächenabschnitten (28a, 30a) aufweist, welche einander gegenüberliegen und einen spitzen Winkel (α) zwischen sich bilden und von denen jeder Flächenabschnitt (28a, 30a) mit einer entsprechenden Innenfläche (20a, 22a) der nach außen konisch erweiterten Endbereiche (20, 22) in Eingriff ist;

einer einstellbaren Klemmvorrichtung (16), die eine Innenfläche mit zwei Flächenabschnitten (24a, 26) aufweist, die einander gegenüberliegen und einen spitzen Winkel (α) zwischen sich bilden und von denen jeder Flächenabschnitt (24a, 26a) mit einer entsprechenden Außenfläche (20b, 22b) der nach außen konisch erweiterten Endbereiche (20, 22) in Eingriff ist, und

Verstellmitteln (34, 36) zum Einstellen der Klemmvorrichtung (16) gegenüber der Außenfläche (20b, 22b) jedes nach außen konisch erweiterten Endbereichs (20, 22), um dadurch den Druck an den in Eingriff befindlichen Flächen zu erhöhen; dadurch gekennzeichnet, daß

i) zumindest eine dieser Flächen (20a, 22a; 20b, 22b) Ausricht- und Drehmomentübertragungsmittel (40) aufweist;

ii) zumindest ein Flächenabschnitt (28a, 30a; 24a, 26a) zumindest des Reaktionsringes (18, 118) oder der einstellbaren Klemmvorrichtung (16) Ausricht- und Drehmomentübertragungsmittel (38; 128, 130, 138) aufweist, die mit den Ausricht- und Drehmomentübertragungsmitteln (40) der Wellenoberflächen (20a, 22a; 20b, 22b) kompatibel sind; und

iii) das Ineingriffsein der kompatiblen Ausricht- und Drehmomentübertragungsmittel (40, 38; 128, 130, 138) die Relativbewegung zwischen in Eingriff befindlichen Flächen im wesentlichen verhindert, wodurch die Längsachsen der beiden Wellen (12, 14) sich ausrichten und die Drehmomentübertragung und dadurch die Rotation um die ausgerichteten Längsachsen ermöglicht sind.

2. Kupplung nach Anspruch 1, dadurch gekennzeichnet, daß die einstellbare Klemmvorrichtung einen geschlitzten Ring (16) aufweist und die Verstellmittel eine Mutter- und -Bolzen-Kombination (34, 36), die die beiden Ringe des geschlitzten Ringes verbinden, besitzen.

3. Kupplung nach Anspruch 1 oder 2, dadurch gekennzeichnet, daß der Reaktionsring (18, 118) ferner eine Innenfläche mit zwei Flächenabschnitten besitzt, von denen jeder sich im wesentlichen parallel zum betreffenden Außenflächenabschnitt (28a, 30a) erstreckt.

4. Kupplung nach einem der Ansprüche 1 bis 3, dadurch gekennzeichnet, daß die einstellbare Klemmvorrichtung (16) ferner eine Außenfläche mit zwei Flächenabschnitten besitzt, von denen jeder sich im wesentlichen parallel zum entsprechenden Innenflächenabschnitt (24a, 26a) erstreckt.

5. Kupplung nach einem der Ansprüche 1 bis 4, dadurch gekennzeichnet, daß die Ausricht- und Drehmomentübertragungsmittel zum Ausrichten der Wellen (12, 14) und zum Ermöglichen der Drehmomentübertragung zumindest einen Vorsprung (38; 128, 130, 138) auf der Außenfläche (28a, 30a) des Reaktionsringes (18) und einen entsprechenden Einschnitt (40) in der Innenfläche (24a, 26a) einer der gegenüberliegenden Innenflächen des nach außen konisch erweiterten Endbereichs (20, 22) aufweisen.

6. Kupplung nach Anspruch 5, dadurch gekennzeichnet, daß zumindest ein Vorsprung und ein entsprechender Einschnitt ein Polygon-Profil (128, 138, 130) definieren.

7. Kupplung nach einem der Ansprüche 1 bis 6, dadurch gekennzeichnet, daß die Wellen (12, 14), der Reaktionsring (18, 118) und die einstellbare Klemmvorrichtung (16) Verbundbauweise besitzen.

**Revendications**

1. Couplage (10) pour connecter deux arbres (12, 14) en vue de leur rotation, chaque arbre définissant un axe longitudinal et ayant une portion d'extrémité (20, 22) creuse évasée vers l'extérieur par rapport à l'axe longitudinal, laquelle définit une surface intérieure (20a; 22a) et une surface extérieure (20b; 22b), ce couplage comportant:

—une bague de réaction (18; 118) ayant une surface extérieure comportant deux sections de surface (28a; 30a) qui sont opposées l'une à l'autre et définissent entre elles un angle aigu (α), chaque section de surface (28a; 30a) étant en contact respectivement avec une surface intérieure (20a; 22a) des portions d'extrémité (20, 22) évasées vers l'extérieur;

—des moyens de blocage (16) ajustables ayant une surface intérieure comprenant deux sections de surface (24a, 26a) qui sont opposées l'une à l'autre et définissent entre elles un angle aigu (α), chaque section de surface (24a, 26a) étant en contact respectivement avec une surface extérieure (20b, 22b) des portions d'extrémité (20, 22) évasées vers l'extérieur;

—des moyens d'ajustement (34, 36) pour ajuster les moyens de blocage (16) contre la surface extérieure (20b, 22b) de chaque portion d'extrémité (20, 22) évasée vers l'extérieur de façon à augmenter la pression sur les surfaces en contact;

Ce couplage étant caractérisé en ce que:

i) au moins une des surfaces (20a, 22a; 20b, 22b) comprend des moyens (40) d'alignement et de transmission de couple, ii) au moins une section de surface (28a, 30a; 24a, 26a) d'au moins la bague de réaction (18, 118) ou les moyens de blocage (16) ajustables comprend des moyens (38; 128, 130, 138) d'alignement et de transmission de couplage compatibles avec les moyens (40) d'alignement et de transmission de couple des surfaces d'arbres (20a, 22a; 20b, 22b); et

iii) l'emboîtement des moyens (40; 38, 128, 130, 138) d'alignment et de transmission de couple compatibles empêchant substantiellement un mouvement relatif entre les surfaces en contact de façon à aligner les axes longitudinaux des deux arbres (12, 14) et à permettre la transmission de couple et ainsi la rotation autour des axes longitudinaux alignés.

2. Couplage selon la revendication 1, caractérisé en ce que les moyens de blocage ajustables comportent une bague à fente (16) et les moyens d'ajustement comportent une combinaison à écrou et boulon (34, 36) connectant les deux bagues de la bague à fente.

3. Couplage selon la revendication 1 ou 2, caractérisé en ce que la bague de réaction (18, 118) a en outre une surface intérieure comprenant deux sections de surface s'étendant chacune généralement parallèlement à une section correspondante des sections de surfaces extérieures (28a, 30a).

4. Couplage selon les revendications 1 à 3, caractérisé en ce que les moyens de blocage (16) ajustables ont en outre une surface extérieure comportant deux sections de surface s'étendant chacune généralement parallèlement à une section correspondante des sections de surface intérieures (24a, 26a).

5. Couplage selon les revendications 1 à 4, caractérisé en ce que les moyens d'alignement et de transmission de couple pour aligner les arbres (12, 14) et permettre la transmission de couple comportent au moins un élément saillant (38; 128, 130, 138) sur la surface extérieure (28a, 30a) de la bague de réaction (18) et un évidement (40) correspondant dans la surface intérieure (24a, 26a) d'une surface en vis-à-vis des surfaces intérieures d'une portion d'extrémité (20, 22) évasée vers l'extérieur.

6. Couplage selon la revendication 5, caractérisé en ce que au moins un élément saillant et l'évidement correspondant définissent le profil d'un polygone (128, 138, 130).

7. Couplage selon les revendications 1 à 6, caractérisé en ce que les arbres (12, 14), la bague de réaction (18, 118) et les moyens de blocage (16) ajustables comportent des structures composites.

## FIG.I

## FIG.2

FIG.3

FIG.7

FIG.4

FILAMENT
DIRECTION

FIG.5

FIG.6

EP 0 204 010 B1